# EUROPÄISCHE PATENTSCHRIFT

(11) **EP 4 212 487 B1**
(45) Veröffentlichungstag und Bekanntmachung des Hinweises auf die Patenterteilung: **11.03.2026**
(21) Anmeldenummer: 23150904.3
(22) Anmeldetag: 10.01.2023
(51) Int. Cl.: C03B 9/30, C03B 9/08, C03B 9/02

(54) **VORRICHTUNG ZUM HERSTELLEN EINES HOHLGLASKÖRPERS**
DEVICE FOR PRODUCING A HOLLOW GLASS BODY
DISPOSITIF DE FABRICATION D'UN CORPS EN VERRE CREUX

(30) Priorität: 12.01.2022 LU 501239
(43) Veröffentlichungstag der Anmeldung: 19.07.2023
(73) Patentinhaber: Duran Produktions GmbH & Co. KG, 55122 Mainz (DE)
(72) Erfinder: CARL, Jens, 55271 Stadecken-Elsheim (DE); LICUL, Frank, 55122 Mainz (DE); SCHMIDTMANN, Thomas, 55286 Wörrstadt (DE)
(74) Vertreter: Hoffmann, Jürgen

(56) Entgegenhaltungen:
- DE-C1- 3 122 400
- FR-A- 608 276

## Beschreibung

Die Erfindung betrifft Vorrichtung zum Herstellen eines Hohlglaskörpers, die eine Glasmaterialhaltevorrichtung mit einem Durchgangskanal für ein unter Druck stehendes Gas, und einen Rotationsantrieb zum Rotieren der Glasmaterialhaltevorrichtung sowie eine Bewegungsvorrichtung, mittels der die räumliche Position und/oder die räumliche Ausrichtung der Glasmaterialhaltevorrichtung veränderbar sind, aufweist.

Die Erfindung betrifft außerdem Verfahren zum Herstellen von Hohlglaskörpern, insbesondere von Glasflaschen aus Borosilikatglas unter Verwendung einer solchen Vorrichtung.

Hohlglaskörper werden zumeist mit Glasmaschinen durch verschiedene Verfahren, wie Pressen, Blasen, Saugen oder Kombinationen aus diesen Verfahren hergestellt. Allerdings ist die Größe der mit solchen Glasmaschinen herstellbaren Hohlglaskörper aus verschiedenen Gründen begrenzt. Insbesondere ist es nicht möglich, große Hohlglaskörper, die einen relativ zum Körperdurchmesser schlanken Hals aufweisen, mit solchen Glasmaschinen herzustellen.

Aus FR 608 276 A ist eine Maschine zur Herstellung von geblasenen Glasartikeln bekannt. Die Maschine weist einen an einer um eine horizontale Achse drehbar gelagerten Traverse angeordnetes Spannfutter zum Halten eines zu bearbeitenden Glasstücks auf. Das gehaltene Glasstück kann mittels eines Motors rotiert werden. Außerdem kann durch eine Leitung Luft in das gehaltene Glasstück geblasen werden. Die Traverse kann samt dem Spannfutter und dem gehaltenen Glasstück in Schwingung versetzt werden.

Aus DE 31 22 400 C1 ist eine Vorrichtung zum Ausblasen von Hohlglaskörpern in einer Form bekannt. Die Vorrichtung weist an einem Greiferkopf eine Spannzange zum Halten des Mundstücks einer Glasmacher-Pfeife auf. Der Greiferkopf ist so ausgebildet, dass die Pfeife in Drehung versetzt werden kann, wozu ein Motor am Greiferkopf vorhanden ist. Es gibt darüber hinaus eine Druckluftquelle, mittels der Luft durch die Pfeife gepumpt werden kann. Die Pfeife kann samt dem ausgeblasenen Glasposten für einen Abkühlungsvorgang motorisch angetrieben in eine horizontale Position gekippt werden.

Es ist daher die Aufgabe der vorliegenden Erfindung, eine Vorrichtung anzugeben, mit der auch große Hohlglaskörper, insbesondere solche, die einen relativ zum Körperdurchmesser schlanken Hals aufweisen, automatisiert oder wenigsten teilautomatisch herstellbar sind.

Die Aufgabe wird durch eine Vorrichtung gelöst, die gekennzeichnet ist durch eine Vorformeinheit mit wenigstens einem Vorformelement, mit dem das von der Glasmaterialhaltevorrichtung gehaltene, insbesondere rotierende, Glasmaterial in Kontakt bringbar ist, und durch eine weitere Bewegungsvorrichtung, mittels der die räumliche Ausrichtung der Vorformeinheit oder wenigstens eines Teils der Vorformeinheit einstellbar ist.

Die Erfindung hat den ganz besonderen Vorteil, dass auch große Hohlglaskörper, beispielsweise Glasflaschen mit einem Fassungsvermögen von einem Vielfachen von 10 Litern, mit einer großen Reproduzierbarkeit bei geringem Ausschuss herstellbar sind. Beispielsweise können mit der erfindungsgemäßen Vorrichtung Glasflaschen mit einem Fassungsvermögen von 40 Litern und mehr problemlos und mit einer sehr großen Genauigkeit bei großer Reproduzierbarkeit und geringem Ausschuss hergestellt werden. Es hat sich gezeigt, dass hierbei sogar die Verwendung von Glassorten möglich ist, die sehr hohe Anforderung an die Einhaltung bestimmter Parameter, wie die Einhaltung bestimmter Temperaturbereiche, stellen. Ganz besonders vorteilhaft können erfindungsgemäß beispielsweise sogar Glasflaschen aus Borosilikatglas Fassungsvermögen im Bereich von 40 bis 50 Litern hergestellt werden, obwohl der Temperaturbereich innerhalb dem eine Verarbeitung dieses Glases möglich ist, sehr klein ist.

In ganz besonders vorteilhafter Weise können erfindungsgemäß insbesondere auch große Hohlglaskörper, insbesondere Glasflaschen mit einem Fassungsvermögen von 40 Litern und mehr, automatisiert oder wenigsten teilautomatisch herstellt werden, die einen relativ zum Körperdurchmesser im Bauchbereich schlanken Hals aufweisen.

Es wurde erkannt, dass es für einen automatisierten Herstellungsprozess von ganz besonderem Vorteil ist, einen von einer Glasmaterialhaltevorrichtung gehaltenen Posten aus flüssigem Glasmaterial, vorzugsweise automatisch gesteuert, sowohl rotieren, in unterschiedlichste Richtungen ausrichten, variabel positionieren sowie für einen Blasvorgang mit einem unter Druck stehenden Gas, insbesondere Druckluft, beaufschlagen zu können, wobei mehrere dieser Vorgänge bei Bedarf auch gleichzeitig ausführbar sind, ohne den Posten von der Glasmaterialhaltevorrichtung entfernen zu müssen.

Die Glasmaterialhaltevorrichtung kann vorteilhaft dazu ausgebildet sein, an ihrem freien Ende einen Posten Glasmaterials, insbesondere einen Posten flüssigen Glasmaterials, zu tragen. Die Glasmaterialhaltevorrichtung kann insbesondere teilweise rohrförmig ausgebildet sein, um den Durchgangskanal für ein unter Druck stehende Gas auszubilden. Bei einer besonderen Ausführung ist die Glasmaterialhaltevorrichtung ausreichend stabil ausgebildet, um einen Posten flüssigen Glasmaterials mit einem Gewicht von weit mehr als 10 Kilo tragen zu können, was es ermöglicht, besonders großvolumige Hohlglaskörper mit einer ausreichend stabilen Wandung herstellen zu können.

Zu Beginn des Herstellvorganges wird ein von der Glasmaterialhaltevorrichtung gehaltener Posten flüssigen Glasmaterials relativ zu der Glasmaterialhaltevorrichtung, vorzugsweise symmetrisch, ausgerichtet und ggf. auch in eine Grundform gebracht. Dies kann durch die manuelle Eingabe von Steuerungsbefehlen mittels einer Eingabevorrichtung für den Rotationsantrieb und/oder die Bewegungsvorrichtung erfolgen.

Nach einem ganz besonderen - eigenständigen - Erfindungsgedanken erfolgt das Ausrichten des Postens flüssigen Glases relativ zu der Glasmaterialhaltevorrichtung und/oder das Überführen des Postens flüssigen Glases in eine vorbestimmte oder vorbestimmbare Grundform automatisch. Hierfür kann die Vorrichtung wenigsten einen Sensor aufweisen, der dazu ausgebildet ist, wenigstens eine Eigenschaft des Glasmaterials, insbesondere eine Glasmaterialtemperatur oder eine Temperaturverteilung oder eine Viskosität zur erfassen oder der dazu ausgebildet ist, eine räumliche Ausrichtung und/oder eine räumliche Position und/oder eine äußere Form des Glasmaterials zu erfassen. Die Sensorvorrichtung kann insbesondere einen optischen Sensor oder ein Pyrometer oder einen Infrarotsensor oder eine Kamera aufweisen und/oder Teil eines Bildverarbeitungssystems sein.

Insbesondere kann - nach dem eigenständigen Erfindungsgedanken- vorteilhaft vorgesehen sein, dass die Sensorvorrichtung fortlaufend oder in, vorzugsweise regelmäßigen, Zeitabständen die Relativposition und/oder die Relativausrichtung des flüssigen Glasmaterials relativ zu der Glasmaterialhaltevorrichtung und/oder die äußere Form des flüssigen Glasmaterials und/oder die Wärmeverteilung innerhalb des flüssigen Glasmaterials erfasst und in Form von Sensorsignalen an eine Steuerungsvorrichtung übergibt. Die Steuerungsvorrichtung kann vorteilhaft dazu ausgebildet sein, die Rotationsgeschwindigkeit und/oder Ausrichtung und/oder Position der das flüssige Glasmaterial haltenden Glasmaterialhaltevorrichtung unter Berücksichtigung der Sensorsignale derart zu regeln, dass das flüssige Glasmaterial, insbesondere unter Einwirkung der Gewichtskraft, eine vordefinierte oder vordefinierbare Grundform, insbesondere eine Birnenform, annimmt.

Die Vorrichtung kann vorteilhaft einen Ofen aufweisen, in den das von der Glasmaterialhaltevorrichtung gehaltene Glasmaterial für einen Erhitzungsvorgang mittels der Bewegungsvorrichtung überführt und aus dem das von der Glasmaterialhaltevorrichtung gehaltene Glasmaterial anschließend wieder entnommen werden kann. Beispielsweise kann vorteilhaft vorgesehen sein, dass ein von der Glasmaterialhaltevorrichtung gehaltener Posten Glasmaterials nach einem Ausrichtvorgang oder während eines Ausrichtvorganges, bei dem der Posten relativ zu der Glasmaterialhaltevorrichtung, vorzugsweise symmetrisch, ausgerichtet und ggf. auch in eine Grundform gebracht wird, vor der Weiterverarbeitung, insbesondere vor einem Vorformprozess, in dem Ofen erneut erhitzt wird.

Nachdem der Posten an Glasmaterial relativ zu der Glasmaterialhaltevorrichtung, vorzugsweise symmetrisch, ausgerichtet und ggf. auch in eine Grundform gebracht wurde, wird der Posten an Glasmaterial in eine vordefinierte oder vordefinierbare Vorform gebracht, die es ermöglicht, den Posten anschließend in einer Blasform auszublasen.

Erfindungsgemäß weist die Vorrichtung eine Vorformeinheit mit wenigstens einem Vorformelement auf, mit dem das von der Glasmaterialhaltevorrichtung gehaltene, insbesondere rotierende, Glasmaterial in Kontakt bringbar ist. Insbesondere kann die Vorformeinheit eine Pritsche beinhalten, die eine Anlagefläche für das, insbesondere rotierende, Glasmaterial aufweist und/oder die wenigstens ein Vorformelement trägt.

Beispielsweise kann als Vorformelement eine Platte angeordnet sein, die als Einschnürplatte fungiert. Hierzu kann die Platte an ihrer von der Pritsche weg gerichteten Stirnseite eine, insbesondere bogenförmige und/oder im Querschnitt halbkreisförmige, Ausnehmung aufweisen. Ein Vorformprozess kann hierbei beinhalten, dass das Glasmaterial mittels der Bewegungsvorrichtung an die Pritsche angenähert und der obere Bereich des Postens an Glasmaterial in die Ausnehmung eingeführt wird, während das Glasmaterial gleichzeitig um die eigene Achse rotiert wird, so dass der Bereich des Glasmaterials, der an die Glasmaterialhaltevorrichtung angrenzt, eingeschnürt, um eine Art Hals auszubilden.

Bei einer besonders vorteilhaften Ausführung weist die Vorformeinheit einen senkrecht an der Pritsche angeordneten Unterstützungsboden auf, der bei dem Vorformprozess verhindert, dass der Posten an Glasmaterial auf Grund der einwirkenden Gewichtskraft zu lang wird. Ein zu langer Posten an Glasmaterial hätte den Nachteil, dass der Posten nach dem Vorformprozess nicht in die Blasform passt.

Die Vorformeinheit kann vorteilhaft wenigstens eine Heizvorrichtung, insbesondere eine Heizdüse, durch die ein heißes Gas strömt, oder einen Brenner aufweisen, die es ermöglicht, einen Teilbereich des, insbesondere rotierenden, Postens an Glasmaterial lokal zu erwärmen, um die Fließfähigkeit des Glasmaterial gezielt in diesem Teilbereich zu erhöhen. Insbesondere kann vorteilhaft vorgesehen sein, dass die Position und/oder die Ausrichtung der Heizvorrichtung relativ zu dem Posten und/oder relativ zu einem anderen Bauteil der Vorformeinheit, insbesondere automatisch gesteuert, einstellbar sind.

Bei einer ganz besonders vorteilhaften Ausführung weist die Vorformeinheit wenigstens eine Führungsvorrichtung auf, entlang der die Heizvorrichtung, insbesondere automatisch und/oder motorisch gesteuert, verschiebbar gelagert ist. Die Führungsvorrichtung kann insbesondere als eine Linearführung ausgebildet sein. Vorzugsweise ist die Führungsvorrichtung derart ausgebildet und ausgerichtet, dass die Heizvorrichtung parallel zur Rotationsachse des Postens an Glasmaterial, der gerade in der Vorformeinheit bearbeitet wird, verschiebbar ist. Hierbei bleibt die Heizvorrichtung vorzugsweise stets derart ausgerichtet, dass sie die Wärme, insbesondere radial, in Richtung auf die Rotationsachse des Postens an Glasmaterial abgibt. Die Führungsvorrichtung kann vorteilhaft direkt oder indirekt an der Pritsche befestigt sein. Dies hat den besonderen Vorteil, dass die eingestellte Relativposition und die eingestellte Ausrichtung der Heizvorrichtung relativ zu dem Posten an Glasmaterial erhalten bleiben, wenn die Pritsche geneigt wird, was weiter unten beschrieben wird.

Alternativ oder zusätzlich kann die Vorformeinheit vorteilhaft wenigstens eine Abkühlvorrichtung, insbesondere eine Kühldüse, durch die beispielsweise Umgebungsluft geblasen werden kann, aufweisen, die es ermöglicht, einen Teilbereich des, insbesondere rotierenden, Postens an Glasmaterial lokal abzukühlen, um die Fließfähigkeit des Glasmaterial gezielt in diesem Teilbereich zu verringern. Insbesondere kann vorteilhaft vorgesehen sein, dass die Position und/oder die Ausrichtung der Abkühlvorrichtung relativ zu dem Posten und/oder relativ zu einem anderen Bauteil der Vorformeinheit, insbesondere automatisch gesteuert, einstellbar sind.

Analog, wie oben in Bezug auf die wenigstens eine Heizvorrichtung bereits beschrieben, kann die Vorformeinheit wenigstens eine Führungsvorrichtung für die Abkühlvorrichtung aufweisen. Besonders flexibel und vielseitig einsetzbar ist eine Ausführung, bei der es für jede Heizvorrichtung und für jede Abkühlvorrichtung eine eigene Führungsvorrichtung gibt. Bei einer vorteilhaften Ausführung weist die Vorformeinheit eine Führungsvorrichtung für die Abkühlvorrichtung auf, die es erlaubt die Abkühlvorrichtung, insbesondere automatisch und/oder motorisch gesteuert, zu verschieben. Die Führungsvorrichtung kann insbesondere als eine Linearführung ausgebildet sein. Vorzugsweise ist die Führungsvorrichtung derart ausgebildet und ausgerichtet, dass die Abkühlvorrichtung parallel zur Rotationsachse des Postens an Glasmaterial, der gerade in der Vorformeinheit bearbeitet wird, verschiebbar ist. Hierbei bleibt die Abkühlvorrichtung vorzugsweise stets derart ausgerichtet, dass sie, insbesondere radial, in Richtung auf die Rotationsachse des Postens an Glasmaterial wirkt, indem sie beispielsweise kühlende Luft in diese Richtung abgibt. Auch die Führungsvorrichtung für die Abkühlvorrichtung kann vorteilhaft direkt oder indirekt an der Pritsche befestigt sein. Dies hat den besonderen Vorteil, dass die eingestellte Relativposition und die eingestellte Ausrichtung der Abkühlvorrichtung relativ zu dem Posten an Glasmaterial erhalten bleiben, wenn die Pritsche geneigt wird.

Insbesondere kann - nach einem eigenständigen Erfindungsgedanken - vorteilhaft vorgesehen sein, dass die Wärmeverteilung innerhalb des Postens an Glasmaterial mittels eines Sensors, beispielsweise mittels einer Infrarotkamera, fortlaufend oder in, insbesondere regelmäßigen, Zeitabständen erfasst wird und der Ort (bzw. die Orte) und/oder die jeweilige Dauer der Erwärmung bzw. Abkühlung von der Steuerungsvorrichtung automatisch unter Berücksichtigung der Sensorsignale gesteuert wird. Hierbei kann vorteilhaft vorgesehen sein, dass von der Steuerungsvorrichtung ein vorgebbares oder ein vorgegebenes und in einem Speicher hinterlegtes Wärmeprofil des Postens an Glasmaterial erzeugt wird.

Das lokale Aufheizen und Abkühlen des Glasmaterials mittels der wenigstens einen Heizvorrichtung bzw. der wenigstens einen Abkühlvorrichtung dient dazu, die Fließeigenschaften des Glasmaterials spezifisch lokal so zu beeinflussen, dass der Posten an Glasmaterial unter Einwirkung der Gewichtskraft und/oder unter Einwirkung der formenden Vorformelemente eine vordefinierte oder vordefinierbare Vorform annimmt.

Erfindungsgemäß ist eine weitere Bewegungsvorrichtung vorhanden, mittels der die räumliche Ausrichtung der Vorformeinheit oder wenigstens eines Teils der Vorformeinheit eingestellt werden kann. Auf diese Weise ist es insbesondere ermöglicht, die Vorformeinheit oder wenigstens Teile der Vorformeinheit derart auszurichten, dass der Posten an Glasmaterial, insbesondere unter Einwirkung der Gewichtskraft und/oder unter Einwirkung der formenden Vorformelemente eine vordefinierte oder vordefinierbare Vorform annimmt. Es kann zusätzlich vorgesehen sein, dass mittels der weiteren Bewegungsvorrichtung auch die räumliche Position der Vorformeinheit oder wenigstens eines Teils der Vorformeinheit eingestellt werden kann.

Beispielsweise kann vorteilhaft vorgesehen sein, dass eine Neigung der Vorformeinheit, insbesondere der Pritsche der Vorformeinheit, relativ zur Vertikalen im Bereich von 0 Grad bis 55 Grad, insbesondere im Bereich von 0 Grad bis 45 Grad oder im Bereich von 0 Grad bis 40 Grad, insbesondere stufenlos, einstellbar ist. Eine solche Ausführung ermöglicht es in vorteilhafter Weise insbesondere, dass die Vorformeinheit zunächst vertikal ausgerichtet wird und das Glasmaterial mittels der Bewegungsvorrichtung vertikal nach unten hängend an die ebenfalls vertikal ausgerichtete Pritsche angenähert wird, während der Posten an Glasmaterial gleichzeitig um die eigene Achse rotiert wird. Hierbei kann der Bereich des Glasmaterials, der an die Glasmaterialhaltevorrichtung angrenzt, mittels einer Einschnürplatte der Vorformeinheit eingeschnürt werden. Anschließend oder währenddessen kann die Vorformeinheit mittels der weiteren Bewegungsvorrichtung auf einen von Null Grad verschiedenen Neigungswinkel relativ zur Vertikalen, vorzugsweise auf einen Winkel im Bereich von 25 bis 55 Grad, insbesondere von 40 Grad, geneigt werden, wobei die Glasmaterialhaltevorrichtung und das von ihr gehaltene Glasmaterial durch synchrone Ansteuerung der Bewegungsvorrichtung synchron mit geneigt wird, insbesondere so, dass die Rotationsachse der Glasmaterialhaltevorrichtung parallel (und vorzugsweise auch in demselben Abstand) zu der Pritsche der Vorformeinheit bleibt.

Es hat sich gezeigt, dass eine Neigung relativ zur Vertikalen im Bereich von 25 Grad bis 55 Grad, insbesondere im Bereich von 35 Grad bis 45 Grad oder von genau 40 Grad, von ganz besonderem Vorteil ist. Bei einem größeren Winkel relativ zur Vertikalen arbeitet sich der Posten Glasmaterial sich seitlich nach außen heraus und wird zu breit. Bei einem kleineren Winkel wird das Glasmaterial durch die einwirkende Gewichtskraft zu lang bzw. fließt viel Glas auf den Unterstützungsboden (falls vorhanden), so dass der Posten im Ergebnis nicht die Gewünschte Vorform aufweist.

Ganz allgemein kann vorteilhaft vorgesehen sein, dass die Bewegungsvorrichtung und die weitere Bewegungsvorrichtung, insbesondere automatisch, synchron gesteuert werden, wobei das synchrone Steuern insbesondere beinhalten kann, dass der von der Glasmaterialhaltevorrichtung gehaltene Posten an Glasmaterial und die Vorformeinheit (oder wenigstens ein Teil der Vorformeinheit) wenigstens in einem zeitlich oder räumlich begrenzten Abschnitt gleichzeitig gleiche Bewegungen ausführen. Beispielsweise kann, wie bereits erwähnt vorteilhaft vorgesehen sein, dass die Bewegungsvorrichtung und die weitere Bewegungsvorrichtung, insbesondere automatisch, derart gesteuert werden, dass die Relativposition und/oder die Relativausrichtung der Rotationsachse der Glasmaterialhaltevorrichtung zur der Vorformeinheit, insbesondere zu der Pritsche der Vorformeinheit, auch während einer Änderung der räumlichen Ausrichtung oder Position der Vorformeinheit, insbesondere der Pritsche, konstant bleibt.

Die Vorrichtung kann vorteilhaft eine, insbesondere elektronische, Steuerungsvorrichtung aufweisen.

Insbesondere kann die Vorrichtung vorteilhaft eine Steuerungsvorrichtung aufweisen, die einen durch den Durchgangskanal verlaufenden Gasstrom und/oder den Rotationsantrieb und/oder die Bewegungsvorrichtung, insbesondere automatisch, steuert oder regelt. Die Steuerungsvorrichtung kann einen Computer beinhalten oder als Computer ausgebildet sein. Insbesondere kann vorteilhaft vorgesehen sein, dass die Steuerungsvorrichtung auch die weitere Bewegungsvorrichtung, insbesondere automatisch, steuert oder regelt.

Bei einer ganz besonders vorteilhaften Ausführung können von einer Bedienperson Steuerungsbefehle mittels einer Eingabevorrichtung, insbesondere während des laufenden Betriebs der Vorrichtung, eingegeben werden. Die Eingabevorrichtung kann beispielsweise eine Tastatur, einen Joystick und/oder einen Touchscreen umfassen. Auf diese Weise ist es beispielsweise ermöglicht, einen durch den Durchgangskanal verlaufenden Gasstrom und/oder den Rotationsantrieb und/oder die Bewegungsvorrichtung und/oder die weitere Bewegungsvorrichtung manuell zu steuern. Hierbei kann insbesondere vorgesehen sein, dass die Steuerungsvorrichtung die von der Bedienperson eingegeben Steuerungsbefehle anstelle von abgespeicherten oder automatisch erzeugten Steuerungsvorgaben und/oder zusätzlich zu hinterlegten oder automatisch erzeugten Steuerungsvorgaben berücksichtigt. Dies ermöglicht es der Bedienperson einzugreifen, wenn Sie erkennt, dass zur Verarbeitung des Postens an Glasmaterial ein Vorgang oder ein Teilvorgang erforderlich ist, den die Steuerungsvorrichtung eigenständig nicht bewirken kann oder nicht bewirken würde. Hierbei kann die Bearbeitung auch in der Weise erfolgen, dass die Steuerungsvorrichtung wenigstens einen Vorgang unabhängig von den von der Bedienperson eingegeben Steuerungsbefehlen vornimmt oder fortsetzt, während wenigstens ein anderer Vorgang entsprechend den von der Bedienperson eingegeben Steuerungsbefehlen ausgeführt wird.

Die Vorrichtung weist vorzugsweise eine, insbesondere aufklappbare, Blasform auf, in die der von der Glasmaterialhaltevorrichtung gehaltene, insbesondere vertikal nach unten hängende, Posten an Glasmaterial (vorzugsweise nach einem Vorformungsprozess) mittels der Bewegungsvorrichtung eingebracht werden kann. Vorzugsweise wird der Posten zumindest während des anschließenden Blasvorganges, bei dem Gas, insbesondere Druckluft, durch den Durchgangskanal strömt, mittels des Rotationsantriebes um eine, insbesondere vertikale, Rotationsachse rotiert, so dass sich im Inneren des Glasmaterials ein Hohlraum ausbildet und sich Glasmaterial gegen die Innenseite der Wandung der Blasform legt.

Nach dem Blasvorgang kann der fertige Hohlglaskörper mittels der Bewegungsvorrichtung der Blasform entnommen werden.

Bei einer vorteilhaften Ausführung weist die Vorrichtung wenigstens einen, insbesondere optischen, Messsensor auf, mittels dem der entnommene Hohlglaskörper, insbesondere automatisch, zu Zwecken der Qualitätskontrolle überprüft werden kann. Insbesondere kann vorteilhaft vorgesehen sein, dass die Wanddicke des Hohlglaskörpers an wenigstens einer Stelle gemessen wird.

Bei einer vorteilhaften Ausführung weist die Vorrichtung einen Glasschneider auf, der beispielsweise als Diamantmesser ausgebildet und dazu bestimmt sein kann, den Hohlglaskörper von dem überschüssigen Glas, über das der der Blasform entnommene Hohlglaskörper noch mit der Glasmaterialhaltevorrichtung in Verbindung steht, zu trennen. Dies kann in der Weise erfolgen, dass mittels der Bewegungsvorrichtung ein Kontakt des Glasmaterials zu dem Glasschneider hergestellt und das Glasmaterial mittels der Rotationsvorrichtung derart rotiert wird, dass der Glasschneider das Glasmaterial umlaufend einritzt. Anschließend wird der Hohlglaskörper durch ein lokales Schockkühlen on dem überschüssigen Glas abgetrennt.

Ganz allgemein kann die Vorrichtung vorteilhaft wenigsten eine Sensorvorrichtung aufweisen, die dazu ausgebildet ist, wenigstens eine Eigenschaft des Glasmaterials, insbesondere eine Glasmaterialtemperatur oder eine Temperaturverteilung oder eine Glasdicke oder eine Wanddicke oder eine Viskosität, zur erfassen oder die dazu ausgebildet ist, eine räumliche Ausrichtung und/oder eine räumliche Position und/oder eine äußere Form des Glasmaterials zu erfassen. Die Sensorvorrichtung kann dazu dienen, Sensorsignale für eine, insbesondere automatische, Ausrichtung des Postens an Glasmaterial relativ zu der Glasmaterialhaltevorrichtung und/oder für die Erzeugung einer Vorform des Glasmaterials und/oder für eine Qualitätskontrolle zu erzeugen und beispielsweise an eine Steuerungsvorrichtung und/oder an eine Ausgabevorrichtung, wie beispielsweise einen Bildschirm, zu übergeben. Die Sensorvorrichtung kann insbesondere einen optischen Sensor oder ein Pyrometer oder einen Infrarotsensor oder eine Kamera aufweisen und/oder Teil eines Bildverarbeitungssystems sein.

Die wenigstens eine Sensorvorrichtung kann, wie bereits erwähnt, beispielsweise dazu ausgebildet ist, fortlaufend oder in, vorzugsweise regelmäßigen, Zeitabständen die Relativposition und/oder die Relativausrichtung des flüssigen Glasmaterials relativ zu der Glasmaterialhaltevorrichtung und/oder die äußere Form des flüssigen Glasmaterials und/oder die Wärmeverteilung innerhalb des flüssigen Glasmaterials zu erfassen. Insbesondere kann vorgesehen sein, dass die Sensorvorrichtung entsprechende Sensorsignale an die Steuerungsvorrichtung übergibt.

Insbesondere kann die Steuerungsvorrichtung, wie ebenfalls bereits erwähnt, dazu ausgebildet sein, die Rotationsgeschwindigkeit und/oder Ausrichtung und/oder Position der das flüssige Glasmaterial haltenden Glasmaterialhaltevorrichtung unter Berücksichtigung der Sensorsignale derart zu regeln, dass das flüssige Glasmaterial, insbesondere unter Einwirkung der Gewichtskraft, eine vordefinierte odervordefinierbare Grundform annimmt.

Alternativ oder zusätzlich kann vorteilhat vorgesehen sein, dass die Steuerungsvorrichtung dazu ausgebildet ist, die Rotationsgeschwindigkeit und/oder Ausrichtung und/oder Position der das flüssige Glasmaterial haltenden Glasmaterialhaltevorrichtung und Ausrichtung und/oder Position der Vorformeinheit und/oder die Heizvorrichtung und/oder die Kühlvorrichtung derart zu steuern oder zu regeln, dass das flüssige Glasmaterial eine vordefinierte oder vordefinierbare Vorform annimmt.

Bei einer ganz besonders robusten und zuverlässigen Ausführung weist die Bewegungsvorrichtung einen Industrieroboter auf oder ist als Industrieroboter ausgebildet.

Vorzugsweise ist die Bewegungsvorrichtung, wenigstens größtenteils, in einem Schutzmantel, insbesondere aus Kevlar und/oder Edelstahl, angeordnet, der die Bewegungsvorrichtung vor hohen Temperaturen, insbesondere vor der Strahlungswärme des Glasmaterials und/oder eines Ofens schützt.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine erste Detailansicht eines Ausführungsbeispiels einer erfindungsgemäßen Vorrichtung zum Herstellen eines Hohlglaskörpers,
- Fig. 2: eine zweite Detailansicht des Ausführungsbeispiels einer erfindungsgemäßen Vorrichtung zum Herstellen eines Hohlglaskörpers,
- Fig. 3: eine dritte Detailansicht des Ausführungsbeispiels einer erfindungsgemäßen Vorrichtung zum Herstellen eines Hohlglaskörpers,
- Fig. 4: eine vierte Detailansicht des Ausführungsbeispiels einer erfindungsgemäßen Vorrichtung zum Herstellen eines Hohlglaskörpers,
- Fig. 5: eine fünfte Detailansicht des Ausführungsbeispiels einer erfindungsgemäßen Vorrichtung zum Herstellen eines Hohlglaskörpers,
- Fig. 6: eine sechste Detailansicht des Ausführungsbeispiels einer erfindungsgemäßen Vorrichtung zum Herstellen eines Hohlglaskörpers, und
- Fig. 7: eine Detailansicht des Ausführungsbeispiels einer anderen erfindungsgemäßen Vorrichtung zum Herstellen eines Hohlglaskörpers.

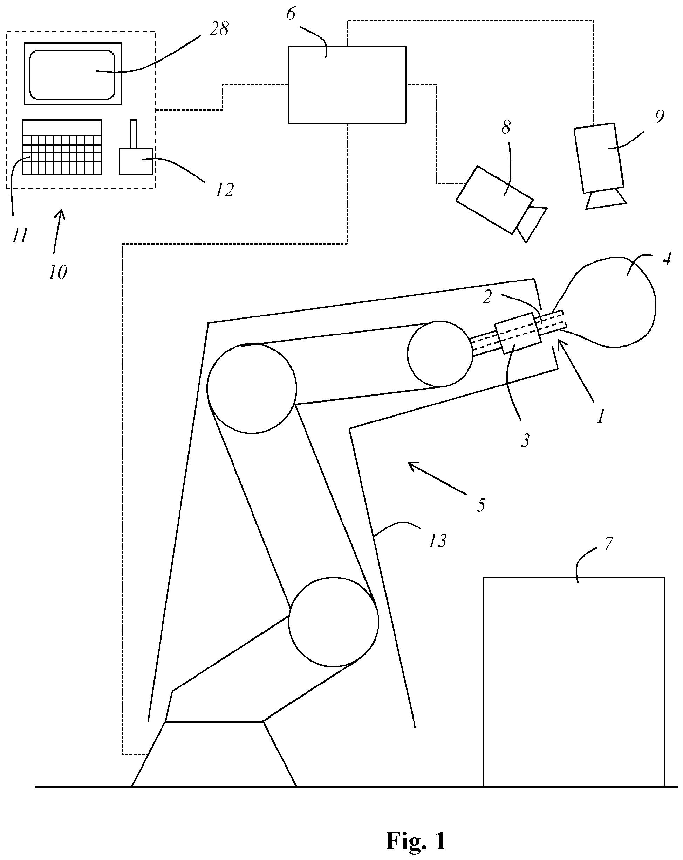

Figur 1 zeigt schematisch eine erste Detailansicht eines Ausführungsbeispiels einer erfindungsgemäßen Vorrichtung zum Herstellen eines Glashohlkörpers 25. Die Vorrichtung weist eine Glasmaterialhaltevorrichtung 1 mit einem Durchgangskanal 2 für ein unter Druck stehendes Gas, beispielsweise für Druckluft, auf. Die Vorrichtung weist einen Druckluftgenerator auf, der fluidisch an den Durchgangskanal 2 angeschlossen ist, was jedoch in den Figuren nicht dargestellt ist. Die Vorrichtung weist außerdem einen Rotationsantrieb 3 zum Rotieren der Glasmaterialhaltevorrichtung auf. Mit der Glasmaterialhaltevorrichtung 1 kann ein Posten flüssigen Glasmaterials 4 aufgenommen und mittels des Rotationsantriebs 3 in Rotation versetzt werden.

Die Vorrichtung weist außerdem eine Bewegungsvorrichtung 5 auf, mittels der die räumliche Position und/oder die räumliche Ausrichtung der Glasmaterialhaltevorrichtung 1 veränderbar sind. Die Bewegungsvorrichtung kann beispielsweise als mehrachsiger Industrieroboter ausgebildet sein.

Die Vorrichtung weist eine Steuerungsvorrichtung 6 auf, die die Bewegungsvorrichtung 5 und den Rotationsantrieb 3 steuert. Die Steuerungsvorrichtung 6 steuert außerdem ein (nicht dargestelltes) Ventil und/oder eine (nicht dargestellte) Gaspumpe zur Beaufschlagung des Glasmaterials 4 mit einem unter Druck stehenden Gas, insbesondere mit Druckluft, durch den Durchgangskanal 2.

Die Vorrichtung weist außerdem einen Ofen 7 auf, in dem das von der Glasmaterialhaltevorrichtung 1 gehaltene Glasmaterial 2 für einen Erhitzungsvorgang mittels der Bewegungsvorrichtung 5 überführt werden kann und aus dem das von der Glasmaterialhaltevorrichtung 1 gehaltene Glasmaterial 4 anschließend wieder entnehmbar ist.

In einem ersten Schritt wird das Glasmaterial 4 in eine vordefinierte oder vordefinierbare Grundform gebracht und relativ zu der Glasmaterialhaltevorrichtung symmetrisch ausgerichtet. Hierbei wird insbesondere die auf das Glasmaterial wirkende Gewichtskraft ausgenutzt, wobei das Glasmaterial mittels der Rotationsvorrichtung fortlaufend geeignet gedreht und mittels der Bewegungsvorrichtung geeignet ausgerichtet wird, damit das Glasmaterial der Gewichtskraft folgend fließt, bis es die vordefinierte Form erreicht hat und relativ zu der Rotationsachse der Glasmaterialhaltevorrichtung symmetrisch ausgerichtet ist.

Nach einem eigenständigen Erfindungsgedanken weist die Vorrichtung wenigstens eine Kamera 8, die Teil eines Bildverarbeitungssystems ist, auf. Die Kamera 8 ist an die Steuerungsvorrichtung 6 angeschlossen. Mittels der Kamera 8 wird vorlaufend oder wenigstens in, vorzugsweise regelmäßigen, Zeitabständen, die Relativposition und/oder die Relativausrichtung des flüssigen Glasmaterials 4 relativ zu der Glasmaterialhaltevorrichtung 1 und/oder die äußere Form des Postens an Glasmaterial 4 erfasst und in Form von Sensorsignalen an die Steuerungsvorrichtung 6 übergeben.

Darüber hinaus ist eine Infrarotkamera 9 an die Steuerungsvorrichtung 6 angeschlossen, mittels der die Wärmeverteilung innerhalb des flüssigen Glasmaterials 4 erfasst und in Form von weiteren Sensorsignalen an die Steuerungsvorrichtung 6 übergeben wird.

Die Steuerungsvorrichtung 6 ermittelt anhand der Sensorsignale die jeweils aktuell erforderliche Rotationsbewegung, insbesondere hinsichtlich der Rotationsrichtung und Rotationsgeschwindigkeit, und Ausrichtung des Glasmaterials 4 und steuert die Bewegungsvorrichtung 5 sowie den Rotationsantrieb 3 entsprechend so, dass die vordefinierte Grundform und die erforderliche Ausrichtung des Glasmaterials relativ zur Glasmaterialhaltevorrichtung 1 erreicht wird.

Die Vorrichtung weist außerdem eine Eingabevorrichtung 10 auf, mittels der auch während des laufenden Betriebs der Vorrichtung Steuerungsbefehle von einer Bedienperson eingegeben werden können. Die Eingabevorrichtung 10 weist eine Tastatur 11, einen Touchscreen 28 und einen Joystick 12 auf. Insbesondere kann die Eingabevorrichtung als PC ausgebildet sein. Mittels der Eingabevorrichtung kann ein Bediener Steuerungsbefehle eingeben und an die Steuerungsvorrichtung zum Steuern des Rotationsantriebs 3 und/oder zum Steuern der Bewegungsvorrichtung 5 senden. Beispielsweise ist es möglich, die Steuerungsvorrichtung in einem Override-Modus zu betreiben, mit dem der Bediener ein bestimmtes Verhalten der Bewegungsvorrichtung 5 und/oder des Rotationsantriebs 3 erzwingen kann, wobei abgespeicherte oder automatisch erzeugte Steuerungsvorgaben der Steuerungsvorrichtung überschrieben werden. Alternativ ist es auch möglich, dass die Steuerungsvorrichtung die von einem Bediener eingegebenen Steuerungsbefehle zusätzlich zu hinterlegten oder automatisch erzeugten Steuerungsvorgaben berücksichtigt.

Grundsätzlich ist es möglich, auch ohne die Kamera 8 und ohne den Infrarotsensor 9 auszukommen, indem das Ausrichten des Glasmaterials 4 relativ zu der Glasmaterialhaltevorrichtung 1 und/oder das Überführen des Glasmaterials 4 in eine Grundform von dem Bediener über die Eingabevorrichtung 10 vollständig alleine gesteuert wird. Ganz besonders vorteilhaft ist es - nach einem eigenständigen Erfindungsgedanken - jedoch, wenn das Ausrichten und/oder das Überführen in die Grundform vollkommen automatisch ablaufen.

Die Bewegungsvorrichtung 5 ist größtenteils in einem Schutzmantel 13 angeordnet, der die Bewegungsvorrichtung 5 vor hohen Temperaturen, insbesondere vor der Strahlungswärme des Glasmaterials 4 und des Ofens 7 schützt.

Nach dem Ausrichten des Glasmaterials 4 und/oder dem Überführen des Glasmaterials 4 in die Grundform wird das Glasmaterial vor der Weiterverarbeitung in den Ofen erneut erhitzt. Wenn es sich dem Glasmaterial um Borosilikatglas handelt ist es von Vorteil, wenn der Ofen eine Ofentemperatur im Bereich von 1.550° C bis 1.600° C hat.

Anschließend wird das Glasmaterial 4 mittels der Bewegungsvorrichtung 5 zu einer Vorformeinheit 14 überführt.

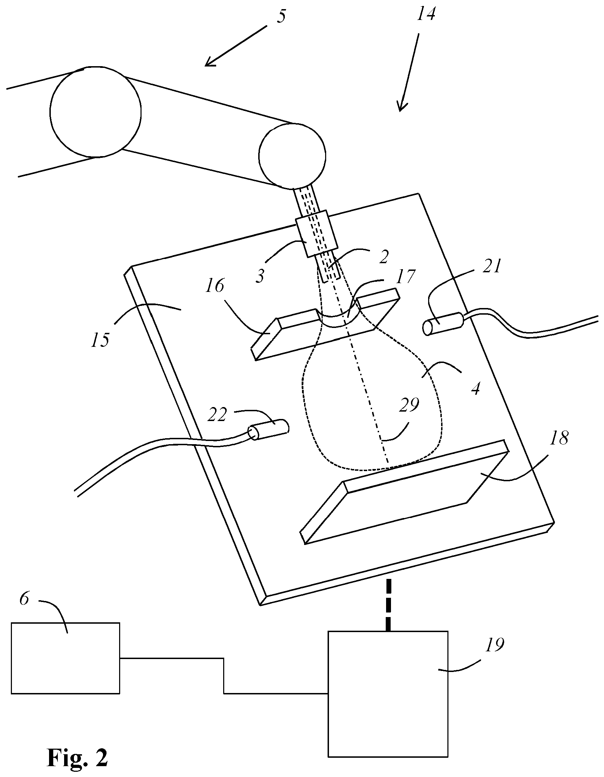

Figur 2 zeigt schematisch die Vorformeinheit 14 des Ausführungsbeispiels der erfindungsgemäßen Vorrichtung zum Herstellen eines Glashohlkörpers 25.

Die Vorformeinheit 14 weist eine Pritsche 15 auf, an die das Glasmaterial 4, während es mittels des Rotationsantriebs 3 rotiert wird, angenähert wird. Die Vorformeinheit weist eine an der Pritsche 15 angeordnete Platte 16 auf, die an ihrer von der Pritsche 15 weg gerichteten Stirnseite eine bogenförmige Ausnehmung 17 aufweist, die dazu dient, den oberen Bereich des Glasmaterials 4 einzuschnüren. Die Vorformeinheit 14 weist außerdem einen an der Pritsche 15 befestigten und senkrecht von dieser abstehenden Unterstützungsboden 18 auf.

Es ist eine weitere (nur ganz schematisch eingezeichnete) Bewegungsvorrichtung 19 vorhanden, die ebenfalls an die Steuerungsvorrichtung 6 angeschlossen ist. Mit der weiteren Bewegungsvorrichtung 19 kann die räumliche Position und/oder die räumliche Ausrichtung der Vorformeinheit 14 eingestellt werden.

Der Vorformprozess läuft vorzugsweise derart ab, dass die Pritsche 15 zunächst vertikal ausgerichtet und das Glasmaterial 4 mittels der Bewegungsvorrichtung 5 vertikal nach unten hängend an die Pritsche 15 angenähert wird, während das Glasmaterial 4 gleichzeitig um die eigene Rotationsachse 29 rotiert wird. Hierbei wird der Bereich des Glasmaterials, der an die Glasmaterialhaltevorrichtung 1 angrenzt, durch die die Ausnehmung 17 begrenzenden Kanten eingeschnürt, um eine Art Hals auszubilden.

Während das Glasmaterial weiter rotiert wird, wird die Pritsche 15 mittels der weiteren Bewegungsvorrichtung 19 auf einen Neigungswinkel 23 relativ zur Vertikalen von etwa 40° geneigt, wobei die Glasmaterialhaltevorrichtung 1 und das von ihr gehaltene Glasmaterial 4 durch synchrone Ansteuerung der Bewegungsvorrichtung 5 synchron mit geneigt wird, so dass die Rotationsachse der Glasmaterialhaltevorrichtung 1 parallel und in demselben Abstand zu der Pritsche 15 der Vorformeinheit 14 bleibt

Es hat sich gezeigt, dass ein Neigungswinkel 23 im Bereich von 25° bis 55° insbesondere im Bereich von 35° bis 45° von ganz besonderem Vorteil ist. Bei einem größeren Winkel würde sich der Posten Glasmaterial 4 seitlich zu sehr herausarbeiten, so dass die Vorform nicht erreicht wird. Bei einem kleineren Neigungswinkel 23 würde ein zu großer Anteil des Glasmaterials 4 auf den Unterstützungsboden fließen, so dass die Vorform ebenfalls nicht erreicht wird.

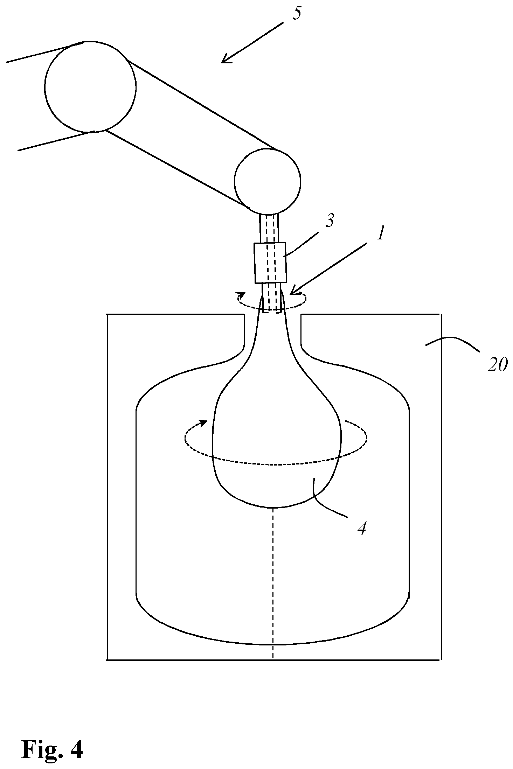

Von ganz besonderem Vorteil ist der Unterstützungsboden 18, der die Länge des Postens an Glasmaterial 4 begrenzt und auf diese Weise gewährleistet, dass der Posten an Glasmaterial 4 in jedem Fall vollständig nach dem Vorformprozess in die Blasform 20, die in Figur 4 dargestellt ist, überführt werden kann.

Die Vorformeinheit 14 weist eine Heizvorrichtung 21, nämlich einen Gasbrenner auf, mittels dem ein Bereich des Glasmaterials 4 gezielt erwärmt werden kann, um die Fließfähigkeit in diesem Bereich zu erhöhen. Insbesondere kann vorteilhaft vorgesehen sein, dass die Position und/oder die Ausrichtung der Heizvorrichtung 21, insbesondere automatisch gesteuert, einstellbar sind.

Die Vorformeinheit 14 weist außerdem eine Abkühlvorrichtung 22, nämlich eine Kühldüse, durch die Luft geblasen werden kann, auf. Die Abkühlvorrichtung 22 erlaubt es, einen Teil des Glasmaterials 4 gezielt abzukühlen, um die Fließfähigkeit in diesem Bereich gezielt zu verringern.

Das lokale Aufheizen und Abkühlen des Glasmaterials 4 dient dazu, die Fließeigenschaften des Glasmaterials 4 so zu beeinflussen, dass es unter Einwirkung der Gewichtskraft und der formenden Vorformelemente der Vorformeinheit 14 eine vordefinierte oder vordefinierbare Vorform annimmt.

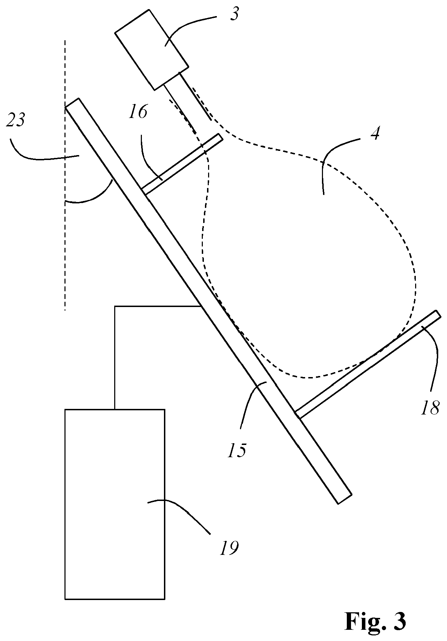

Figur 3 zeigt die Vorformeinheit 14 ganz schematisch in einer Seitenansicht.

Am Ende des Vorformvorganges werden die Vorformeinheit 14 und der Posten an Glasmaterial 4 in einer synchronen Bewegung zurück in die Vertikale überführt.

Nach dem Vorformen wird das Glasmaterial 4 mittels der Bewegungsvorrichtung 5 vertikal nach unten an der Glasmaterialhaltevorrichtung 1 hängend in eine Blasform 20, die in Figur 4 dargestellt ist, überführt. Konkret handelt es sich um eine Blasform 20, die um eine vertikale Achse aufgeklappt werden kann. Zum Ausblasen wird das Glasmaterial 4 mit Druckluft beaufschlagt, die durch den Durchgangskanal 2 strömt, so dass im Inneren des Glasmaterials 4 ein Hohlraum ausbildet wird und sich das Glasmaterial 4 von innen an die Wandung der Blasform 20 anschmiegt.

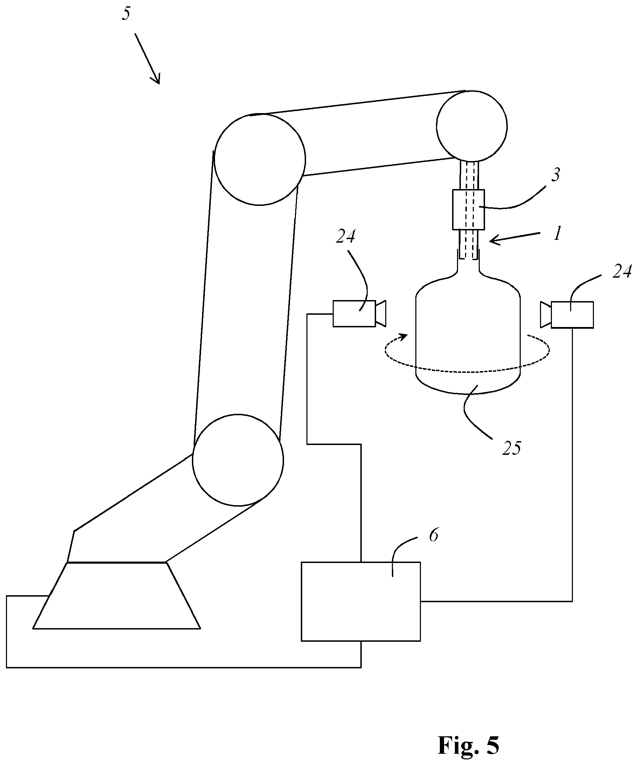

Anschließend wird der fertige Hohlglaskörper der Blasform 20 entnommen und mittels optischer Messsensoren 24, die an die Steuerungsvorrichtung 6 angeschlossen sind, insbesondere hinsichtlich der Wandstärke, vermessen. Dies ist in Figur 5 dargestellt.

Danach führt die Bewegungsvorrichtung 5 den Glashohlkörper 25 zu einem Glasschneider 26 um im Bereich oberhalb des Halses des Glashohlkörpers 25 einen umlaufenden Ritz anzubringen. Anschließend wird der Glashohlkörpers 25 durch ein lokales Schockkühlen abgetrennt, von einem Halteelement 27 aufgefangen und weiter transportiert.

Danach kann das Verfahren wiederholt werden, um einen weiteren Hohlglaskörper 25 herzustellen.

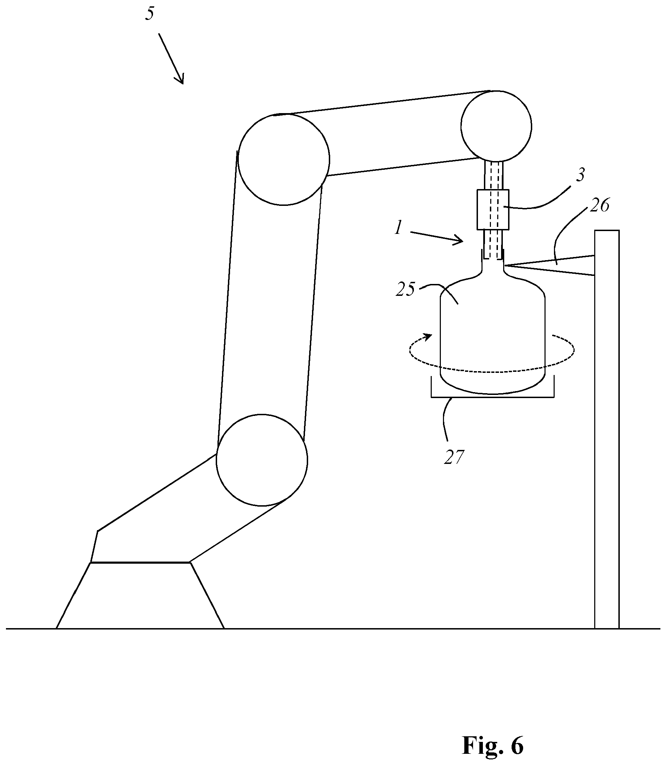

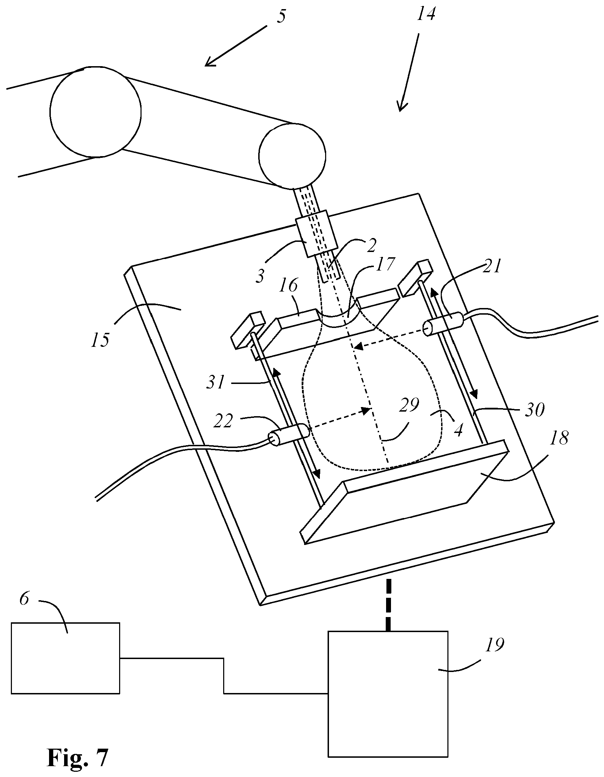

Figur 7 zeigt eine Detailansicht des Ausführungsbeispiels einer anderen erfindungsgemäßen Vorrichtung zum Herstellen eines Hohlglaskörpers. Dieses Ausführungsbeispiel ist ähnlich aufgebaut, wie das in den Figuren 1 bis 6 dargestellte Ausführungsbeispiel.

Bei diesem Ausführungsbeispiel weist die Vorformeinheit 14 eine erste Führungsvorrichtung 30 auf, entlang der die Heizvorrichtung 21 von einem nicht dargestellten Motor angetrieben, insbesondere automatisch gesteuert, verschiebbar ist (was in der Figur 7 durch einen Doppelpfeil angedeutet ist). Die erste Führungsvorrichtung 30 ist als Linearführung ausgebildet und parallel zu der Achse ausgerichtet, auf der die Rotationsachse 29 des Postens an Glasmaterial 4 für eine Bearbeitung in der Vorformeinheit 14 positioniert wird. Die Heizvorrichtung 21 ist derart ausgerichtet, dass sie die Wärme unabhängig von ihrer Verschiebeposition stets radial in Richtung auf die Rotationsachse 29 des Postens an Glasmaterial 4 abgibt, was in Figur 7 durch den gestrichelten Pfeil angedeutet ist. Die erste Führungsvorrichtung 30 ist an der Pritsche 15 befestigt. Dies hat den besonderen Vorteil, dass die eingestellte Relativposition und die eingestellte Ausrichtung der Heizvorrichtung 21 relativ zu dem Posten an Glasmaterial 4 erhalten bleiben, wenn die Pritsche 15 mittels der weiteren Bewegungsvorrichtung 19 geneigt wird.

Außerdem weist die Vorformeinheit 14 eine zweite Führungsvorrichtung 31 auf, entlang der die Abkühlvorrichtung 22 von einem nicht dargestellten weiteren Motor angetrieben, insbesondere automatisch gesteuert, verschiebbar ist (was in der Figur 7 durch einen Doppelpfeil angedeutet ist). Die zweite Führungsvorrichtung 31 ist ebenfalls als Linearführung ausgebildet und parallel und parallel zu der Achse ausgerichtet, auf der die Rotationsachse 29 des Postens an Glasmaterial 4 für eine Bearbeitung in der Vorformeinheit 14 positioniert wird. Die Abkühlvorrichtung 22 ist derart ausgerichtet, dass sie unabhängig von ihrer Verschiebeposition stets radial in Richtung auf die Rotationsachse 29 des Postens an Glasmaterial 4 wirkt, indem sie beispielsweise kühlende Luft in diese Richtung bläst, was in Figur 7 durch den gestrichelten Pfeil angedeutet ist. Die zweite Führungsvorrichtung 31 ist an der Pritsche 15 befestigt. Dies hat den besonderen Vorteil, dass die eingestellte Relativposition und die eingestellte Ausrichtung der Abkühlvorrichtung 22 relativ zu dem Posten an Glasmaterial 4 erhalten bleiben, wenn die Pritsche 15 mittels der weiteren Bewegungsvorrichtung 19 geneigt wird.

### Bezugszeichenliste:

- 1: Glasmaterialhaltevorrichtung
- 2: Durchgangskanal
- 3: Rotationsantrieb
- 4: Glasmaterial
- 5: Bewegungsvorrichtung
- 6: Steuerungsvorrichtung
- 7: Ofen
- 8: Kamera
- 9: Infrarotkamera
- 10: Eingabevorrichtung
- 11: Tastatur
- 12: Joystick
- 13: Schutzmantel
- 14: Vorformeinheit
- 15: Pritsche
- 16: Platte
- 17: Bogenförmige Ausnehmung
- 18: Unterstützungsboden
- 19: Weitere Bewegungsvorrichtung
- 20: Blasform
- 21: Heizvorrichtung
- 22: Abkühlvorrichtung
- 23: Winkel
- 24: Messsensor
- 25: Glashohlkörper
- 26: Glasschneider
- 27: Halteelement
- 28: Touchscreen
- 29: Rotationsachse
- 30: Erste Führungsvorrichtung
- 31: Zweite Führungsvorrichtung

## Patentansprüche

1. Vorrichtung zum Herstellen eines Hohlglaskörpers (25), die eine Glasmaterialhaltevorrichtung (1) mit einem Durchgangskanal (2) für ein unter Druck stehendes Gas, und einen Rotationsantrieb (3) zum Rotieren der Glasmaterialhaltevorrichtung (1) sowie eine Bewegungsvorrichtung (5), mittels der die räumliche Position und/oder die räumliche Ausrichtung der Glasmaterialhaltevorrichtung (1) veränderbar sind, aufweist, **gekennzeichnet durch** eine Vorformeinheit (14) mit wenigstens einem Vorformelement, mit dem das von der Glasmaterialhaltevorrichtung (1) gehaltene, insbesondere rotierende, Glasmaterial (4) in Kontakt bringbar ist, und **durch** eine weitere Bewegungsvorrichtung (19), mittels der die räumliche Ausrichtung der Vorformeinheit (14) oder wenigstens eines Teils der Vorformeinheit (14) einstellbar ist.

2. Vorrichtung nach Anspruch 1, **dadurch gekennzeichnet, dass**
a. die Vorformeinheit (14) eine Pritsche (15) beinhaltet, die eine Anlagefläche für das, insbesondere rotierende, Glasmaterial (4) aufweist und/oder die wenigstens ein Vorformelement trägt, und/oder dass
b. die Vorformeinheit (14) eine an der Pritsche (15) angeordnete Platte (16) aufweist, bei der in einer Stirnseite eine, insbesondere bogenförmige und/oder im Querschnitt halbkreisförmige, Ausnehmung (17) ausgebildet ist, und/oder dass
c. die Vorformeinheit (14) einen, insbesondere senkrecht, an der Pritsche (15) angeordneten Unterstützungsboden (18) aufweist, und/oder dass
d. die Vorformeinheit (14) wenigstens eine Heizvorrichtung (21), insbesondere eine Heizdüse oder einen Brenner, und/oder wenigstens eine Abkühlvorrichtung (22), insbesondere eine Kühldüse, aufweist, und/oder dass
e. der weiteren Bewegungsvorrichtung (5) die räumliche Position der Vorformeinheit (14) oder wenigstens eines Teils der Vorformeinheit (14) einstellbar ist, und/oder dass
f. eine Neigung der Vorformeinheit (14), insbesondere der Pritsche (15) der Vorformeinheit (14), relativ zur Vertikalen im Bereich von 0 Grad bis 55 Grad, insbesondere im Bereich von 0 Grad bis 45 Grad, oder im Bereich von 0 Grad bis 40 Grad, insbesondere stufenlos, einstellbar ist, und/oder dass
g. die Bewegungsvorrichtung (5) und die weitere Bewegungsvorrichtung (19) wenigstens teilweise synchron gesteuert sind, und/oder dass
h. die Bewegungsvorrichtung (5) und die weitere Bewegungsvorrichtung (19) derart gesteuert sind, dass die Relativposition und/oder die Relativausrichtung der Rotationsachse der Glasmaterialhaltevorrichtung (1) zur der Vorformeinheit (14) und/oder zu der Pritsche (15), auch während einer Änderung der räumlichen Ausrichtung oder Position der Vorformeinheit (14) und/oder der Pritsche (15), konstant bleibt.

3. Vorrichtung nach Anspruch 1 oder 2, **dadurch gekennzeichnet, dass**
a. eine Steuerungsvorrichtung (6) vorhanden ist, und/oder dass
b. eine Steuerungsvorrichtung vorhanden ist, die einen durch den Durchgangskanal (2) verlaufenden Gasstrom und/oder den Rotationsantrieb (3) und/oder die Bewegungsvorrichtung (5) und/oder die weitere Bewegungsvorrichtung (19), insbesondere automatisch, steuert oder regelt, und/oder dass
c. eine Eingabevorrichtung (10) vorhanden ist, mittels der, insbesondere während des laufenden Betriebs der Vorrichtung, Steuerungsbefehle von einer Bedienperson eingebbar sind, und/oder dass
d. eine Eingabevorrichtung (10) vorhanden ist, mittels der, insbesondere während des laufenden Betriebs der Vorrichtung, Steuerungsbefehle von einer Bedienperson eingebbar sind, wobei die Steuerungsvorrichtung (6) die Steuerungsbefehle anstelle von abgespeicherten oder automatisch erzeugten Steuerungsvorgaben berücksichtigt oder dass die Steuerungsvorrichtung (6) die Steuerungsbefehle zusätzlich zu hinterlegten oder automatisch erzeugten Steuerungsvorgaben berücksichtigt.

4. Vorrichtung nach einem der Ansprüche 1 bis 3, **gekennzeichnet durch** eine, insbesondere aufklappbare, Blasform (20), in die das von der Glasmaterialhaltevorrichtung (1) gehaltene, insbesondere vertikal nach unten hängende, Glasmaterial (4) mittels der Bewegungsvorrichtung (5) einbringbar und während eines Blasvorganges, bei dem Gas **durch** den Durchgangskanal (2) strömt, um eine, insbesondere vertikale, Rotationsachse rotierbar ist.

5. Vorrichtung nach einem der Ansprüche 1 bis 4, **dadurch gekennzeichnet, dass**
a. die Vorrichtung wenigsten eine Sensorvorrichtung aufweist, und/oder dass
b. die Vorrichtung wenigsten eine Sensorvorrichtung aufweist, die dazu ausgebildet ist, wenigstens eine Eigenschaft des Glasmaterials (4), insbesondere eine Glasmaterialtemperatur oder eine Temperaturverteilung oder eine Glasdicke oder eine Wanddicke oder eine Viskosität zur erfassen oder die dazu ausgebildet ist, eine räumliche Ausrichtung und/oder eine räumliche Position und/oder eine äußere Form des Glasmaterials (4) zu erfassen, und/oder dass
c. die Vorrichtung wenigsten eine Sensorvorrichtung aufweist, die einen optischen Sensor oder ein Pyrometer oder einen Infrarotsensor oder eine Kamera aufweist oder dass die Sensorvorrichtung Teil eines Bildverarbeitungssystems ist, und/oder dass
d. die Vorrichtung wenigsten eine Sensorvorrichtung aufweist, die dazu ausgebildet ist, fortlaufend oder in, vorzugsweise regelmäßigen, Zeitabständen die Relativposition und/oder die Relativausrichtung des flüssigen Glasmaterials (4) relativ zu der Glasmaterialhaltevorrichtung (1) und/oder die äußere Form des flüssigen Glasmaterials (4) und/oder die Wärmeverteilung innerhalb des flüssigen Glasmaterials (4) zu erfassen und in Form von Sensorsignalen an die Steuerungsvorrichtung (6) zu übergeben, und/oder dass

6. Vorrichtung nach Anspruch 5 in Kombination mit Anspruch 3 oder 4, dadruch gekennzeichnet, dass
a. die Steuerungsvorrichtung dazu ausgebildet ist, die Rotationsgeschwindigkeit und/oder Ausrichtung und/oder Position der das flüssige Glasmaterial (4) haltenden Glasmaterialhaltevorrichtung (1) unter Berücksichtigung der Sensorsignale derart zu regeln, dass das flüssige Glasmaterial (4), insbesondere unter Einwirkung der Gewichtskraft, eine vordefinierte oder vordefinierbare Grundform annimmt, und/oder dass
b. die Steuerungsvorrichtung dazu ausgebildet ist, die Rotationsgeschwindigkeit und/oder Ausrichtung und/oder Position der das flüssige Glasmaterial (4) haltenden Glasmaterialhaltevorrichtung (1) und Ausrichtung und/oder Position der Vorformeinheit (14) und/oder die Heizvorrichtung (21) und/oder die Kühlvorrichtung (22) derart zu steuern oder zu regeln, dass das flüssige Glasmaterial (4) eine vordefinierte oder vordefinierbare Vorform annimmt.

7. Vorrichtung nach einem der Ansprüche 1 bis 6, **dadurch gekennzeichnet, dass**
a. die Bewegungsvorrichtung (5) einen Industrieroboter aufweist oder als Industrieroboter ausgebildet ist, und/oder dass
b. die Bewegungsvorrichtung (5), wenigstens größtenteils, in einem Schutzmantel (13), insbesondere aus Kevlar und/oder Edelstahl, angeordnet ist.

8. Verfahren zum Herstellen von Hohlglaskörpern (25), insbesondere von Glasflaschen aus Borosilikatglas, unter Verwendung einer Vorrichtung nach einem der Ansprüche 1 bis 7.

9. Verfahren nach Anspruch 8, **dadurch gekennzeichnet , dass** ein Posten flüssigen Glasmaterials (4) mit der Glasmaterialhaltevorrichtung (1) aufgenommen und dessen äußere Form durch Einstellen und/oder Verändern der Rotationsgeschwindigkeit und/oder Ausrichtung und/oder Position der das flüssige Glasmaterial (4) haltenden Glasmaterialhaltevorrichtung (1), vorzugsweise automatisch, insbesondere unter Einwirkung der Gewichtskraft, in eine vordefinierte oder vordefinierbare Grundform, insbesondere eine Birnenform, überführt wird.

10. Verfahren nach Anspruch 8 oder 9, **dadurch gekennzeichnet, dass** fortlaufend oder in, vorzugsweise regelmäßigen, Zeitabständen die Relativposition und/oder die Relativausrichtung des flüssigen Glasmaterials (4) relativ zu der Glasmaterialhaltevorrichtung (1) und/oder die äußere Form des flüssigen Glasmaterials (4) und/oder die Wärmeverteilung innerhalb des flüssigen Glasmaterials (4) mittels der Sensorvorrichtung erfasst wird.

11. Verfahren nach einem der Ansprüche 8 bis 10, **dadurch gekennzeichnet, dass**
a. das Glasmaterial (4), insbesondere nachdem es in die Grundform überführt wurde, mittels der Bewegungsvorrichtung (5) zu der Vorformeinheit (14) überführt wird, und/oder dass
b. das Glasmaterial (4) in der Vorformeinheit (14) rotiert wird, während es mit wenigstens einem Vorformelement der Vorformeinheit (14) in unmittelbarem Kontakt steht.

12. Verfahren nach Anspruch 11, **dadurch gekennzeichnet, dass**
a. die Neigung der Vorformeinheit (14) oder wenigstens eines Teils der Vorformeinheit (14), insbesondere von anfänglich Null Grad relativ zur Vertikalen, auf einen von Null Grad verschiedenen Winkel relativ zur Vertikalen, insbesondere einen Winkel im Bereich von 25 Grad bis 55 Grad, insbesondere im Bereich von 35 Grad bis 45 Grad, insbesondere von 40 Grad, eingestellt wird, und/oder dass
b. die Neigung Glasmaterialhaltevorrichtung (1) synchron mit der Neigung der Vorformeinheit (14) oder wenigstens eines Teils der Vorformeinheit (14) verändert wird, und/oder dass
c. die Bewegungsvorrichtung (5) und die weitere Bewegungsvorrichtung (19), insbesondere automatisch, derart gesteuert werden, dass die Relativposition und/oder die Relativausrichtung der Rotationsachse der Glasmaterialhaltevorrichtung (1) zur der Vorformeinheit (14), insbesondere zu der Pritsche, auch während einer Änderung der räumlichen Ausrichtung oder Position der Pritsche konstant bleibt.

13. Verfahren nach einem der Ansprüche 8 bis 12, **dadurch gekennzeichnet, dass** das Glasmaterial (4) lokal mittels der Heizvorrichtung (21) oder mittels der wenigstens einen Abkühlvorrichtung (22), insbesondere automatisch, lokal temperiert wird.

14. Verfahren nach einem der Ansprüche 8 bis 13, **dadurch gekennzeichnet, dass** die Bewegungsvorrichtung (5) und/oder die weitere Bewegungsvorrichtung (19) und/oder die Rotationsgeschwindigkeit und oder die wenigstens eine Heizvorrichtung (21) und/oder die wenigstens eine Abkühlvorrichtung (22) derart gesteuert oder geregelt werden, dass das Glasmaterial (4) eine vordefinierte oder vordefinierbare Vorform annimmt.

15. Verfahren nach einem der Ansprüche 8 bis 14, **dadurch gekennzeichnet, dass**
a. Das Glasmaterial (4), insbesondere vertikal nach unten hängend, in die Blasform (20) überführt wird, und/oder dass
b. das Glasmaterial (4) mittels des Rotationsantriebs (3) in der Blasform (20) rotiert wird, während gleichzeitig ein Gas durch den Durchgangskanal (2) in das Glasmaterial (4) gedrückt wird, und/oder dass
c. der entstandene Hohlglaskörper (25) der Blasform (20) entnommen und mittels des Rotationsantriebs (3) vor einem Sensor zum Erfassen der Wanddicke des Hohlglaskörpers (25) rotiert wird, und/oder dass
d. das Glasmaterial (4) mittels der Bewegungsvorrichtung (5) mit einem Glasschneider (26) in Kontakt und gleichzeitig mittels des Rotationsantriebs (3) rotiert wird, um den entstandenen Hohlglaskörper (25) von der Glasmaterialhaltevorrichtung (1) abzutrennen.

## Claims

1. Device for producing a hollow glass body (25), comprising a glass material holding device (1) with a through-channel (2) for a pressurized gas, and a rotary drive (3) for rotating the glass material holding device (1), as well as a movement device (5) by means of which the spatial position and/or the spatial orientation of the glass material holding device (1) is changeable, **characterized by** a preforming unit (14) having at least one preforming element with which the glass material (4) held by the glass material holding device (1), in particular rotating glass material (4), can be brought into contact, and by a further movement device (19) by means of which the spatial orientation of the preforming unit (14) or at least a part of the preforming unit (14) is adjustable.

2. Device according to claim 1, **characterized in that**
a. the preforming unit (14) comprises a platform (15) which has a supporting surface for the glass material (4), in particular rotating glass material, and/or which carries at least one preforming element, and/or that
b. the preforming unit (14) comprises a plate (16) arranged on the platform (15), in which a recess (17), in particular arcuate and/or semicircular in cross section, is formed in an end face, and/or that
c. the preforming unit (14) comprises a supporting base (18) arranged, in particular vertically, on the platform (15), and/or that
d. the preforming unit (14) comprises at least one heating device (21), in particular a heating nozzle or a burner, and/or at least one cooling device (22), in particular a cooling nozzle, and/or that
e. the spatial position of the preforming unit (14) or at least a part of the preforming unit (14) is adjustable by means of the further movement device (19), and/or that
f. an inclination of the preforming unit (14), in particular of the platform (15) of the preforming unit (14), relative to the vertical in the range from 0 degrees to 55 degrees, in particular in the range from 0 degrees to 45 degrees, or in the range from 0 degrees to 40 degrees, in particular continuously, is adjustable, and/or that
g. the movement device (5) and the further movement device (19) are at least partially synchronously controlled, and/or that
h. the movement device (5) and the further movement device (19) are controlled such that the relative position and/or the relative orientation of the rotation axis of the glass material holding device (1) relative to the preforming unit (14) and/or to the platform (15) remains constant even during a change in the spatial orientation or position of the preforming unit (14) and/or of the platform (15).

3. Device according to claim 1 or 2, **characterized in that**
a. a control device (6) is provided, and/or that
b. a control device is provided which controls or regulates, in particular automatically, a gas flow passing through the through-channel (2) and/or the rotary drive (3) and/or the movement device (5) and/or the further movement device (19), and/or that
c. an input device (10) is provided by means of which control commands can be input by an operator, in particular during ongoing operation of the device, and/or that
d. an input device (10) is provided by means of which control commands can be input by an operator, in particular during ongoing operation of the device, wherein the control device (6) takes the control commands into account instead of stored or automatically generated control specifications, or wherein the control device (6) takes the control commands into account in addition to stored or automatically generated control specifications.

4. Device according to one of claims 1 to 3, **characterized by** a blow mold (20), in particular a blow mold that can be opened, into which the glass material (4) held by the glass material holding device (1), in particular hanging vertically downward, can be introduced by means of the movement device (5) and is rotatable about a rotation axis, in particular a vertical rotation axis, during a blowing process in which gas flows through the through-channel (2).

5. Device according to one of claims 1 to 4, **characterized in that**
a. the device comprises at least one sensor device, and/or that
b. the device comprises at least one sensor device which is configured to detect at least one property of the glass material (4), in particular a glass material temperature or a temperature distribution or a glass thickness or a wall thickness or a viscosity, or which is configured to detect a spatial orientation and/or a spatial position and/or an external shape of the glass material (4), and/or that
c. the device comprises at least one sensor device which comprises an optical sensor or a pyrometer or an infrared sensor or a camera, or wherein the sensor device is part of an image processing system, and/or that
d. the device comprises at least one sensor device which is configured to continuously or at preferably regular time intervals detect the relative position and/or the relative orientation of the liquid glass material (4) relative to the glass material holding device (1) and/or the external shape of the liquid glass material (4) and/or the heat distribution within the liquid glass material (4) and to transmit sensor signals to the control device (6).

6. Device according to claim 5 in combination with claim 3 or 4, **characterized in that**
a. the control device is configured to regulate the rotational speed and/or orientation and/or position of the glass material holding device (1) holding the liquid glass material (4), taking into account the sensor signals, in such a way that the liquid glass material (4), in particular under the influence of gravity, assumes a predefined or predefinable basic shape, and/or that
b. the control device is configured to control or regulate the rotational speed and/or orientation and/or position of the glass material holding device (1) holding the liquid glass material (4) and the orientation and/or position of the preforming unit (14) and/or the heating device (21) and/or the cooling device (22) in such a way that the liquid glass material (4) assumes a predefined or predefinable preform.

7. Device according to one of claims 1 to 6, **characterized in that**
a. the movement device (5) comprises an industrial robot or is designed as an industrial robot, and/or that
b. the movement device (5) is arranged, at least largely, in a protective casing (13), in particular made of Kevlar and/or stainless steel.

8. Method for producing hollow glass bodies (25), in particular glass bottles made of borosilicate glass, using a device according to one of claims 1 to 7.

9. Method according to claim 8, **characterized in that** a gob of liquid glass material (4) is received by the glass material holding device (1) and the external shape thereof is transferred into a predefined or predefinable basic shape, in particular a pear shape, by setting and/or changing the rotational speed and/or orientation and/or position of the glass material holding device (1) holding the liquid glass material (4), preferably automatically, in particular under the influence of gravity.

10. Method according to claim 8 or 9, **characterized in that** the relative position and/or the relative orientation of the liquid glass material (4) relative to the glass material holding device (1) and/or the external shape of the liquid glass material (4) and/or the heat distribution within the liquid glass material (4) are detected continuously or at preferably regular time intervals by means of the sensor device.

11. Method according to one of claims 8 to 10, **characterized in that**
a. the glass material (4), in particular after it has been transferred into the basic shape, is transferred to the preforming unit (14) by means of the movement device (5), and/or that
b. the glass material (4) is rotated in the preforming unit (14) while being in immediate contact with at least one preforming element of the preforming unit (14).

12. Method according to claim 11, **characterized in that**
a. the inclination of the preforming unit (14) or at least a part of the preforming unit (14), in particular from initially zero degrees relative to the vertical, is set to an angle different from zero degrees relative to the vertical, in particular an angle in the range from 25 degrees to 55 degrees, in particular in the range from 35 degrees to 45 degrees, in particular 40 degrees, and/or that
b. the inclination of the glass material holding device (1) is changed synchronously with the inclination of the preforming unit (14) or at least a part of the preforming unit (14), and/or that
c. the movement device (5) and the further movement device (19) are controlled, in particular automatically, in such a way that the relative position and/or the relative orientation of the rotation axis of the glass material holding device (1) relative to the preforming unit (14), in particular relative to the platform, remains constant even during a change in the spatial orientation or position of the platform.

13. Method according to one of claims 8 to 12, **characterized in that** the glass material (4) is locally tempered by means of the heating device (21) or by means of the at least one cooling device (22), in particular automatically.

14. Method according to one of claims 8 to 13, **characterized in that** the movement device (5) and/or the further movement device (19) and/or the rotational speed and/or the at least one heating device (21) and/or the at least one cooling device (22) are controlled or regulated in such a way that the glass material (4) assumes a predefined or predefinable preform.

15. Method according to one of claims 8 to 14, **characterized in that**
a. the glass material (4), in particular hanging vertically downward, is transferred into the blow mold (20), and/or that
b. the glass material (4) is rotated in the blow mold (20) by means of the rotary drive (3) while at the same time a gas is pressed through the through-channel (2) into the glass material (4), and/or that
c. the produced hollow glass body (25) is removed from the blow mold (20) and is rotated by means of the rotary drive (3) in front of a sensor for detecting the wall thickness of the hollow glass body (25), and/or that
d. the glass material (4) is brought into contact with a glass cutter (26) by means of the movement device (5) and is simultaneously rotated by means of the rotary drive (3) in order to separate the produced hollow glass body (25) from the glass material holding device (1).

## Revendications

1. Dispositif destiné à la fabrication d'un corps creux en verre (25), comprenant un dispositif de maintien de matériau en verre (1) avec un canal traversant (2) pour un gaz sous pression, et un entraînement de rotation (3) destiné à faire tourner le dispositif de maintien de matériau en verre (1), ainsi qu'un dispositif de déplacement (5) au moyen duquel la position spatiale et/ou l'orientation spatiale du dispositif de maintien de matériau en verre (1) peuvent être modifiées, **caractérisé par** une unité de préformage (14) comportant au moins un élément de préformage avec lequel le matériau en verre (4) maintenu par le dispositif de maintien de matériau en verre (1), en particulier le matériau en verre en rotation, peut être mis en contact, et par un autre dispositif de déplacement (19) au moyen duquel l'orientation spatiale de l'unité de préformage (14) ou d'au moins une partie de l'unité de préformage (14) est réglable.

2. Dispositif selon la revendication 1, **caractérisé en ce que**
a. l'unité de préformage (14) comprend une plateforme (15) qui présente une surface d'appui pour le matériau en verre (4), en particulier le matériau en verre en rotation, et/ou qui porte au moins un élément de préformage, et/ou que
b. l'unité de préformage (14) comprend une plaque (16) disposée sur la plateforme (15), dans laquelle est formée, dans une face frontale, une échancrure (17), en particulier de forme arquée et/ou semi-circulaire en coupe, et/ou que
c. l'unité de préformage (14) comprend un fond de support (18) disposé, en particulier verticalement, sur la plateforme (15), et/ou que
d. l'unité de préformage (14) comprend au moins un dispositif de chauffage (21), en particulier une buse de chauffage ou un brûleur, et/ou au moins un dispositif de refroidissement (22), en particulier une buse de refroidissement, et/ou que
e. la position spatiale de l'unité de préformage (14) ou d'au moins une partie de l'unité de préformage (14) est réglable au moyen de l'autre dispositif de déplacement (19), et/ou que
f. une inclinaison de l'unité de préformage (14), en particulier de la plateforme (15) de l'unité de préformage (14), par rapport à la verticale dans la plage de 0 degré à 55 degrés, en particulier dans la plage de 0 degré à 45 degrés, ou dans la plage de 0 degré à 40 degrés, en particulier de manière continue, est réglable, et/ou que
g. le dispositif de déplacement (5) et l'autre dispositif de déplacement (19) sont commandés de manière au moins partiellement synchronisée, et/ou que
h. le dispositif de déplacement (5) et l'autre dispositif de déplacement (19) sont commandés de telle sorte que la position relative et/ou l'orientation relative de l'axe de rotation du dispositif de maintien de matériau en verre (1) par rapport à l'unité de préformage (14) et/ou par rapport à la plateforme (15) restent constantes même lors d'une modification de l'orientation spatiale ou de la position de l'unité de préformage (14) et/ou de la plateforme (15).

3. Dispositif selon la revendication 1 ou 2, **caractérisé en ce que**
a. un dispositif de commande (6) est prévu, et/ou que
b. un dispositif de commande est prévu, lequel commande ou régule, en particulier automatiquement, un flux de gaz circulant à travers le canal traversant (2) et/ou l'entraînement de rotation (3) et/ou le dispositif de déplacement (5) et/ou l'autre dispositif de déplacement (19), et/ou que
c. un dispositif d'entrée (10) est prévu, au moyen duquel des commandes de commande peuvent être introduites par un opérateur, en particulier pendant le fonctionnement en cours du dispositif, et/ou que
d. un dispositif d'entrée (10) est prévu, au moyen duquel des commandes de commande peuvent être introduites par un opérateur, en particulier pendant le fonctionnement en cours du dispositif, le dispositif de commande (6) prenant en compte les commandes de commande à la place de consignes de commande mémorisées ou générées automatiquement, ou prenant en compte les commandes de commande en plus de consignes de commande mémorisées ou générées automatiquement.

4. Dispositif selon l'une des revendications 1 à 3, **caractérisé par** un moule de soufflage (20), en particulier un moule de soufflage ouvrable, dans lequel le matériau en verre (4) maintenu par le dispositif de maintien de matériau en verre (1), en particulier suspendu verticalement vers le bas, peut être introduit au moyen du dispositif de déplacement (5) et est rotatif autour d'un axe de rotation, en particulier un axe de rotation vertical, pendant une opération de soufflage au cours de laquelle un gaz circule à travers le canal traversant (2).

5. Dispositif selon l'une des revendications 1 à 4, **caractérisé en ce que**
a. le dispositif comprend au moins un dispositif de capteur, et/ou que
b. le dispositif comprend au moins un dispositif de capteur qui est conçu pour détecter au moins une propriété du matériau en verre (4), en particulier une température du matériau en verre ou une répartition de température ou une épaisseur de verre ou une épaisseur de paroi ou une viscosité, ou qui est conçu pour détecter une orientation spatiale et/ou une position spatiale et/ou une forme extérieure du matériau en verre (4), et/ou que
c. le dispositif comprend au moins un dispositif de capteur comprenant un capteur optique ou un pyromètre ou un capteur infrarouge ou une caméra, ou dans lequel le dispositif de capteur fait partie d'un système de traitement d'images, et/ou que
d. le dispositif comprend au moins un dispositif de capteur qui est conçu pour détecter de manière continue ou à des intervalles de temps de préférence réguliers la position relative et/ou l'orientation relative du matériau en verre liquide (4) par rapport au dispositif de maintien de matériau en verre (1) et/ou la forme extérieure du matériau en verre liquide (4) et/ou la répartition de chaleur à l'intérieur du matériau en verre liquide (4), et pour transmettre des signaux de capteur au dispositif de commande (6).

6. Dispositif selon la revendication 5 en combinaison avec la revendication 3 ou 4, **caractérisé en ce que**
a. le dispositif de commande est conçu pour réguler la vitesse de rotation et/ou l'orientation et/ou la position du dispositif de maintien de matériau en verre (1) maintenant le matériau en verre liquide (4), en tenant compte des signaux de capteur, de telle sorte que le matériau en verre liquide (4), en particulier sous l'effet de la gravité, adopte une forme de base prédéfinie ou prédéfinissable, et/ou que
b. le dispositif de commande est conçu pour commander ou réguler la vitesse de rotation et/ou l'orientation et/ou la position du dispositif de maintien de matériau en verre (1) maintenant le matériau en verre liquide (4) et l'orientation et/ou la position de l'unité de préformage (14) et/ou du dispositif de chauffage (21) et/ou du dispositif de refroidissement (22), de telle sorte que le matériau en verre liquide (4) adopte une préforme prédéfinie ou prédéfinissable.

7. Dispositif selon l'une des revendications 1 à 6, **caractérisé en ce que**
a. le dispositif de déplacement (5) comprend un robot industriel ou est réalisé sous la forme d'un robot industriel, et/ou que
b. le dispositif de déplacement (5) est disposé, au moins en grande partie, dans une enveloppe de protection (13), en particulier en Kevlar et/ou en acier inoxydable.

8. Procédé de fabrication de corps creux en verre (25), en particulier de bouteilles en verre en borosilicate, au moyen d'un dispositif selon l'une des revendications 1 à 7.

9. Procédé selon la revendication 8, **caractérisé en ce qu'**un poste de matériau en verre liquide (4) est pris par le dispositif de maintien de matériau en verre (1) et que sa forme extérieure est transférée dans une forme de base prédéfinie ou prédéfinissable, en particulier une forme en poire, par le réglage et/ou la modification de la vitesse de rotation et/ou de l'orientation et/ou de la position du dispositif de maintien de matériau en verre (1) maintenant le matériau en verre liquide (4), de préférence automatiquement, en particulier sous l'effet de la gravité.

10. Procédé selon la revendication 8 ou 9, **caractérisé en ce que** la position relative et/ou l'orientation relative du matériau en verre liquide (4) par rapport au dispositif de maintien de matériau en verre (1) et/ou la forme extérieure du matériau en verre liquide (4) et/ou la répartition de chaleur à l'intérieur du matériau en verre liquide (4) sont détectées de manière continue ou à des intervalles de temps de préférence réguliers au moyen du dispositif de capteur.

11. Procédé selon l'une des revendications 8 à 10, **caractérisé en ce que**
a. le matériau en verre (4), en particulier après avoir été transféré dans la forme de base, est transféré vers l'unité de préformage (14) au moyen du dispositif de déplacement (5), et/ou que
b. le matériau en verre (4) est mis en rotation dans l'unité de préformage (14) tout en étant en contact immédiat avec au moins un élément de préformage de l'unité de préformage (14).

12. Procédé selon la revendication 11, **caractérisé en ce que**
a. l'inclinaison de l'unité de préformage (14) ou d'au moins une partie de l'unité de préformage (14), en particulier à partir initialement de zéro degré par rapport à la verticale, est réglée à un angle différent de zéro degré par rapport à la verticale, en particulier à un angle dans la plage de 25 degrés à 55 degrés, en particulier dans la plage de 35 degrés à 45 degrés, en particulier 40 degrés, et/ou que
b. l'inclinaison du dispositif de maintien de matériau en verre (1) est modifiée de manière synchrone avec l'inclinaison de l'unité de préformage (14) ou d'au moins une partie de l'unité de préformage (14), et/ou que
c. le dispositif de déplacement (5) et l'autre dispositif de déplacement (19) sont commandés, en particulier automatiquement, de telle sorte que la position relative et/ou l'orientation relative de l'axe de rotation du dispositif de maintien de matériau en verre (1) par rapport à l'unité de préformage (14), en particulier par rapport à la plateforme, restent constantes même lors d'une modification de l'orientation spatiale ou de la position de la plateforme.

13. Procédé selon l'une des revendications 8 à 12, **caractérisé en ce que** le matériau en verre (4) est localement tempéré au moyen du dispositif de chauffage (21) ou au moyen du au moins un dispositif de refroidissement (22), en particulier automatiquement.

14. Procédé selon l'une des revendications 8 à 13, **caractérisé en ce que** le dispositif de déplacement (5) et/ou l'autre dispositif de déplacement (19) et/ou la vitesse de rotation et/ou le au moins un dispositif de chauffage (21) et/ou le au moins un dispositif de refroidissement (22) sont commandés ou régulés de telle sorte que le matériau en verre (4) adopte une préforme prédéfinie ou prédéfinissable.

15. Procédé selon l'une des revendications 8 à 14, **caractérisé en ce que**
a. le matériau en verre (4), en particulier suspendu verticalement vers le bas, est transféré dans le moule de soufflage (20), et/ou que
b. le matériau en verre (4) est mis en rotation dans le moule de soufflage (20) au moyen de l'entraînement de rotation (3) tandis qu'en même temps un gaz est introduit sous pression à travers le canal traversant (2) dans le matériau en verre (4), et/ou que
c. le corps creux en verre (25) obtenu est retiré du moule de soufflage (20) et est mis en rotation au moyen de l'entraînement de rotation (3) devant un capteur destiné à détecter l'épaisseur de paroi du corps creux en verre (25), et/ou que
d. le matériau en verre (4) est mis en contact avec un coupe-verre (26) au moyen du dispositif de déplacement (5) et est simultanément mis en rotation au moyen de l'entraînement de rotation (3) afin de séparer le corps creux en verre (25) obtenu du dispositif de maintien de matériau en verre (1).
